# EUROPEAN PATENT APPLICATION

(11) **EP 4 614 856 A1**
(43) Date of publication of application: **10.09.2025**
(21) Application number: 23884806.3
(22) Date of filing: 30.10.2023
(51) Int. Cl.: H04L 5/00

(54) **METHOD AND APPARATUS IN COMMUNICATION NODE USED FOR WIRELESS COMMUNICATION**

(30) Priority: 31.10.2022 CN 202211365569
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/127582
(87) International publication number: WO 2024/093875

(57) **Abstract**

Disclosed in the present application are a method and apparatus in a communication node used for wireless communication. The method comprises: a first processor receiving a first indication from a lower layer each time, and adding 1 to a first counter; receiving first signaling; and resetting the first counter at a first moment after the first signaling is received, wherein the lower layer comprises a physical layer; the first signaling indicates a first configuration that depends on the number of valid TxRUs of at least a second node; and the first counter is used to monitor the problem of a wireless link. The present application reduces the system implementation complexity, and improves the performance.

## Description

### SPECIFICATION

### Technical Field

This application relates to a transmission method and apparatus in a wireless communication system, and in particular, to a beam management transmission method and apparatus.

### Related Art

In conventional wireless communication, network controlled mobility includes cell level mobility and beam level mobility. The cell level mobility depends on radio resource control (RRC) signaling, and the beam level mobility does not include the RRC signaling. The 3^{rd} generation partnership project (3GPP) R18 expands further research on enhancement of network energy savings, and supports technical enhancement in aspects such as time domain, frequency domain, spatial domain, and power domain. Effects brought by the technical enhancement include mobility, including aspects such as radio link monitoring and beam management.

### SUMMARY

To further enhance a network energy saving technology, various types of energy saving technologies are discussed. The inventor finds through research that, to reduce power consumption of a base station, it becomes possible to dynamically adjust an on/off state of a spatial domain unit. When adjustment is performed for some spatial domain units, a current radio link monitoring mechanism is affected. In this case, radio link monitoring and/or beam management needs to be further adjusted.

For the foregoing problem, this application provides a solution. It should be noted that, although a large quantity of embodiments of this application are described for a new radio (NR) system, this application can also be applied to another type of cellular systems such as a long term evolution (LTE) system. In addition, using a unified solution in different scenarios further helps reduce the hardware complexity and costs.

It should be noted that, an embodiment and features in the embodiment in any node of this application may be applied to any other nodes in a case that no conflict occurs. Embodiments of this application and features in embodiments may be mutually combined in a case that no conflict occurs.

In an embodiment, for explanations of terms in this application, refer to definitions of a standard protocol TS 36 series in 3GPP.

In an embodiment, for explanations of terms in this application, refer to definitions of a standard protocol TS 37 series in 3GPP.

In an embodiment, for explanations of terms in this application, refer to definitions of a standard protocol TS 38 series in 3GPP.

In an embodiment, for explanations of terms in this application, refer to definitions of a standard protocol of the institute of electrical and electronics engineers (IEEE).

This application discloses a method in a first node used for wireless communication. The method includes:
receiving a first indication from a lower layer each time, and adding 1 to a first counter; receiving first signaling; and resetting the first counter at a first moment after the first signaling is received.

The lower layer includes a physical layer, the first signaling indicates a first configuration, the first configuration depends on a quantity of valid TxRUs of at least a second node, and the first counter is used to monitor a radio link problem.

In an embodiment, a problem in this application includes: How to prevent a radio link failure (RLF) from being triggered in a serving cell when a spatial domain unit of a network is adjusted.

In an embodiment, a problem in this application includes: How to prevent an RLF from being prematurely triggered in a serving cell when a spatial domain unit of a network is adjusted.

In an embodiment, a problem in this application includes: How to prevent a beam failure recovery (BFR) from being triggered in a serving cell when a spatial domain unit of a network is adjusted.

In an embodiment, a problem in this application includes: How to prevent a BFR from being prematurely triggered in a serving cell when a spatial domain unit of a network is adjusted.

In an embodiment, a feature of the foregoing method includes: An operation of the first counter is associated with the first signaling.

In an embodiment, a feature of the foregoing method includes: Adjustment of the network on the TxRU is associated with the first configuration, where the first configuration is indicated by the first signaling.

In an embodiment, the spatial domain unit of the network includes the TxRU.

In an embodiment, a benefit of the foregoing method includes preventing the RLF from being quickly triggered.

In an embodiment, a benefit of the foregoing method includes preventing the BFR from being quickly triggered.

In an embodiment, a benefit of the foregoing method includes ensuring user equipment (UE) transmission quality.

In an embodiment, a benefit of the foregoing method includes improving UE service continuity.

According to one aspect of this application,
the first signaling indicates a first time length, the first time length is used to determine a first time interval, and the first moment depends on a cut-off moment of the first time interval.

According to one aspect of this application, the method includes:
receiving second signaling, where the second signaling indicates a first candidate configuration set.

The first candidate configuration set includes at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

According to one aspect of this application, the method includes:
The lower layer reports the first indication to a higher layer each time radio link quality evaluated based on the first RS resource group is worse than a first threshold.

The first RS resource group includes at least one RS resource. The higher layer is a protocol layer above the physical layer.

According to one aspect of this application, the method includes:
The lower layer reports, after the first moment, the first indication to the higher layer each time the radio link quality evaluated based on the first RS resource group is worse than a second threshold.

The first threshold is different from the second threshold.

According to one aspect of this application, the method includes:
At the first moment after the first signaling is received, the first counter is reset when at least the quantity of valid TxRUs of the second node associated with the first RS resource group changes.

This application discloses a method in a second node used for wireless communication. The method includes:
sending first signaling.

A first indication is received from a lower layer each time, 1 is added to a first counter, the first counter is reset at a first moment after the first signaling is received, the lower layer includes a physical layer, the first signaling indicates a first configuration, the first configuration depends on a quantity of valid TxRUs of at least a second node, and the first counter is used to monitor a radio link problem.

According to one aspect of this application,
the first signaling indicates a first time length, the first time length is used to determine a first time interval, and the first moment depends on a cut-off moment of the first time interval.

According to one aspect of this application, the method includes:
sending second signaling, where the second signaling indicates a first candidate configuration set.

The first candidate configuration set includes at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

According to one aspect of this application, the method includes:
The lower layer reports the first indication to a higher layer each time radio link quality evaluated based on a first RS resource group is worse than a first threshold. The first RS resource group includes at least one RS resource. The higher layer is a protocol layer above the physical layer.

According to one aspect of this application, the method includes:
The lower layer reports, after the first moment, the first indication to the higher layer each time the radio link quality evaluated based on the first RS resource group is worse than a second threshold. The first threshold is different from the second threshold.

According to one aspect of this application, the method includes:
At the first moment after the first signaling is received, the first counter is reset when at least the quantity of valid TxRUs of the second node associated with the first RS resource group changes.

This application discloses a first node used for wireless communication, including:
a first processor, receiving a first indication from a lower layer each time, and adding 1 to a first counter; receiving first signaling; and resetting the first counter at a first moment after the first signaling is received.

The lower layer includes a physical layer, the first signaling indicates a first configuration, the first configuration depends on a quantity of valid TxRUs of at least a second node, and the first counter is used to monitor a radio link problem.

This application discloses a second node used for wireless communication, including:
a second transmitter machine, sending first signaling.

A first indication is received from a lower layer each time, 1 is added to a first counter, the first counter is reset at a first moment after the first signaling is received, the lower layer includes a physical layer, the first signaling indicates a first configuration, the first configuration depends on a quantity of valid TxRUs of at least a second node, and the first counter is used to monitor a radio link problem.

In an embodiment, compared with a conventional solution, this application has the following advantages:
- preventing the RLF from being quickly triggered;
- preventing the BFR from being quickly triggered;
- ensuring UE transmission quality; and
- improving UE service continuity.

### BRIEF DESCRIPTION OF THE DRAWINGS

Other features, objectives, and advantages of this application may become more apparent by reading detailed descriptions of non-restrictive embodiments with reference to the following accompanying drawings.
FIG. 1 is a transmission flowchart of first signaling according to an embodiment of this application;
FIG. 2 is a schematic diagram of a network architecture according to an embodiment of this application;
FIG. 3 is a schematic diagram of an embodiment of radio protocol architectures of a user plane and a control plane according to an embodiment of this application;
FIG. 4 is a schematic diagram of a first communication device and a second communication device according to an embodiment of this application;
FIG. 5 is a transmission flowchart of a radio signal according to an embodiment of this application;
FIG. 6 is a transmission flowchart of a radio signal according to another embodiment of this application;
FIG. 7 is a transmission flowchart of a radio signal according to still another embodiment of this application;
FIG. 8 is a schematic diagram of a relationship between a first moment and a cut-off moment of a first time interval according to an embodiment of this application;
FIG. 9 is a schematic diagram of a time relationship between a first configuration and a second configuration according to an embodiment of this application;
FIG. 10 is a schematic diagram of TxRUs respectively associated with a first configuration and a second configuration according to an embodiment of this application;
FIG. 11 is a block diagram of a structure of a processing apparatus used in a first node according to an embodiment of this application; and
FIG. 12 is a block diagram of a structure of a processing apparatus used in a second node according to an embodiment of this application.

### DETAILED DESCRIPTION

The technical solutions of this application are further described in detail below with reference to the accompanying drawings. It should be noted that, embodiments of this application and the features in embodiments may be mutually combined in a case that no conflict occurs.

### Embodiment 1

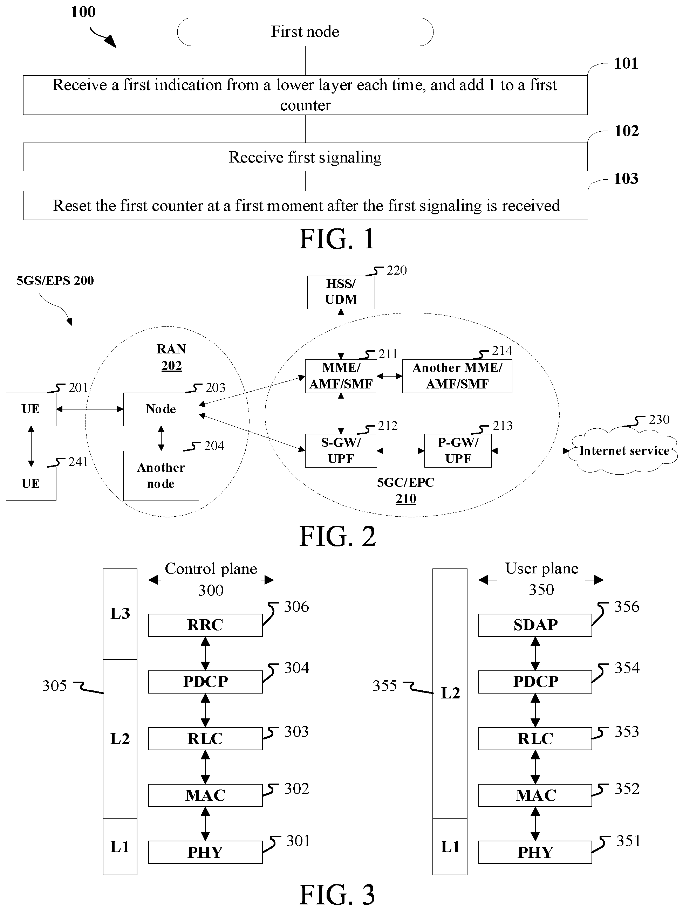

Embodiment 1 is a transmission flowchart of first signaling according to an embodiment of this application, as shown in FIG. 1. In FIG. 1, each box represents a step. It should be particularly noted that a sequence of boxes in the figure does not represent a time sequence between the represented steps.

In Embodiment 1, in step 101, a first node in this application receives a first indication from a lower layer each time, and adds 1 to a first counter. In step 102, first signaling is received. In step 103, the first counter is reset at a first moment after the first signaling is received. The lower layer includes a physical layer, the first signaling indicates a first configuration, the first configuration depends on a quantity of valid TxRUs of at least a second node, and the first counter is used to monitor a radio link problem.

In an embodiment, the second node includes a sender of the first signaling.

In an embodiment, the second node is a sender of the first signaling.

In an embodiment, the second node is a base station.

In an embodiment, the second node is a transmission reception point (Transmitter Receiver Point, TRP).

In an embodiment, the lower layer is a physical layer.

In an embodiment, the lower layer includes any protocol layer below a protocol layer used for sending the first indication.

In an embodiment, the first indication is a cross-layer indication.

In an embodiment, the first indication is sent by the physical layer of the first node.

In an embodiment, the first indication is received by an RRC sublayer of the first node.

In an embodiment, the first indication is received by a MAC sublayer of the first node.

In an embodiment, the first indication is sent by the physical layer of the first node to the MAC sublayer of the first node.

In an embodiment, the first indication is sent by the physical layer of the first node to the RRC sublayer of the first node.

In an embodiment, the first indication is for a special cell (SpCell) of the first node. The second node is a maintenance base station of the SpCell.

In an embodiment, the first indication is for a secondary cell (SCell) of the first node. The second node is a maintenance base station of the SCell.

In an embodiment, the first indication is for a BFD-RS set of the first node.

In an embodiment, the first indication is for a BFD-RS set of the SpCell of the first node.

In an embodiment, the first indication is for a BFD-RS set of an SCell of the first node.

In an embodiment, the first indication is for RadioLinkMonitoringRS of the SpCell of the first node.

In an embodiment, the first indication is for an activated bandwidth part (BWP) of the SpCell of the first node.

In an embodiment, the first indication is for RadioLinkMonitoringRS of the activated BWP of the SpCell of the first node.

In an embodiment, the first indication is a beam failure instance indication, and the first counter is BFI_COUNTER.

In an embodiment, in response to that the first counter reaches a first integer, a beam failure recovery process is triggered.

In a sub-embodiment of this embodiment, the first integer is beamFailureInstanceMaxCount.

In a sub-embodiment of this embodiment, the first integer is configurable.

In a sub-embodiment of this embodiment, the first integer is configured by using beamFailureInstanceMaxCount.

In a sub-embodiment of this embodiment, that the beam failure recovery process is triggered includes: initiating a random access process on the SpCell of the first node; and associating the first counter with the SpCell of the first node.

In a sub-embodiment of this embodiment, the first counter is associated with the SpCell of the first node.

In a sub-embodiment of this embodiment, the first counter is associated with a BFD-RS set of the SpCell of the first node.

In a sub-embodiment of this embodiment, that the beam failure recovery process is triggered includes: triggering a BFR of an SCell of the first node; and associating the first counter with the SCell of the first node.

In a sub-embodiment of this embodiment, the first counter is associated with an SCell of the first node.

In a sub-embodiment of this embodiment, the first counter is associated with a BFD-RS set of the SCell of the first node.

In an embodiment, the first indication is an "out-of-sync" indication, and the first counter is N310.

In a sub-embodiment of this embodiment, only when given T310 is not running, the first indication is received from the lower layer each time, and 1 is added to the first counter.

In an embodiment, in response to that the first counter reaches a second integer, given T310 is started.

In a sub-embodiment of this embodiment, the first counter is associated with the SpCell of the first node.

In a sub-embodiment of this embodiment, given T310 is T310 of the SpCell of the first node.

In a sub-embodiment of this embodiment, in response to that given T310 expires, it is considered that an MCG is detected to undergo a radio link failure, given T310 and the first counter are associated with the SpCell of the first node, and the SpCell is a PCell.

In a sub-embodiment of this embodiment, in response to that given T310 expires, it is considered that a secondary cell group (SCG) is detected to undergo a radio link failure, given T310 and the first counter are associated with the SpCell of the first node, and the SpCell is a primary SCG cell (PSCell).

In a sub-embodiment of this embodiment, the second integer is N310.

In a sub-embodiment of this embodiment, the second integer is configurable.

In a sub-embodiment of this embodiment, the second integer is configured by using N310.

In an embodiment, the SpCell includes a PCell and a PSCell.

In an embodiment, the SpCell is a PCell.

In an embodiment, the SpCell is a PSCell.

In an embodiment, the first signaling is used to determine that at least one TxRU of the second node is off.

In an embodiment, the first signaling is used to determine that the at least one TxRU of the second node is on.

In an embodiment, the first signaling is used to determine that the at least one TxRU of the second node is enabled.

In an embodiment, the first signaling is used to determine that the at least one TxRU of the second node is disabled.

In an embodiment, the first signaling is used to determine that the quantity of valid TxRUs of the second node changes.

In an embodiment, the first signaling is configured for a first cell, and the second node is a maintenance base station of the first cell.

In an embodiment, the first cell is a PCell.

In an embodiment, the first cell is a PScell.

In an embodiment, the first cell is an Scell.

In an embodiment, the first signaling is configured for a first cell group, and the second node is a maintenance base station of the first cell group.

In an embodiment, the first cell group is a master cell group (MCG).

In an embodiment, the first cell group is an SCG.

In an embodiment, the first signaling includes the first configuration.

In an embodiment, the first signaling is used to activate the first configuration.

In an embodiment, the first signaling is used to dynamically activate the first configuration.

In an embodiment, the first signaling includes an RRC message.

In an embodiment, the first signaling includes MAC sublayer signaling.

In an embodiment, the first signaling includes a MAC control element (MAC CE).

In an embodiment, the MAC CE included in the first signaling is indicated by a logical channel ID (LCID).

In an embodiment, the MAC CE included in the first signaling is indicated by an extended LCID (eLCID).

In an embodiment, the first signaling includes physical layer signaling.

In an embodiment, the first signaling includes downlink control information (DCI).

In an embodiment, the first signaling is an RRC message.

In an embodiment, the first signaling is a MAC CE.

In an embodiment, the first signaling is a piece of DCI.

In an embodiment, the first signaling indicates an integer.

In a sub-embodiment of this embodiment, a field in the RRC message included in the first signaling indicates the integer.

In a sub-embodiment of this embodiment, a field in the MAC CE included in the first signaling indicates the integer.

In a sub-embodiment of this embodiment, a field in the DCI included in the first signaling indicates the integer.

In a sub-embodiment of this embodiment, the integer is a non-negative integer.

In a sub-embodiment of this embodiment, the integer is a positive integer.

In a sub-embodiment of this embodiment, the integer indicates a quantity of valid TxRUs.

In a sub-embodiment of this embodiment, the integer indicates an index.

In a sub-embodiment of this embodiment, the integer indicates an index of the first configuration.

In a sub-embodiment of this embodiment, the integer indicates an index of the first configuration in the first candidate configuration set.

In a sub-embodiment of this embodiment, the integer indicates a configuration identifier of the first configuration.

In a sub-embodiment of this embodiment, the integer indicates a configuration identifier of the first configuration in the first candidate configuration set.

In an embodiment, if a TxRU is valid, the TxRU is at least on.

In an embodiment, if a TxRU is off, the TxRU is not valid.

In an embodiment, one TxRU includes at least one sending unit.

In an embodiment, one TxRU includes at least one receiving unit.

In an embodiment, one TxRU includes at least one transmit antenna.

In an embodiment, one TxRU includes at least one receive antenna.

In an embodiment, one TxRU includes at least one antenna element.

In an embodiment, one TxRU includes at least one transceiver unit.

In an embodiment, one TxRU is associated with at least one port.

In an embodiment, one TxRU is associated with at least one antenna element.

In an embodiment, one TxRU is associated with at least one transmit antenna.

In an embodiment, one TxRU is associated with at least one receive antenna.

In an embodiment, one TxRU is used to determine a mapping relationship between a port and an antenna element.

In an embodiment, the TxRU stands for transformer rectifier unit.

In an embodiment, the TxRU stands for transceiver unit.

In an embodiment, the TxRU stands for TRU.

In an embodiment, the first configuration is related to the quantity of valid TxRUs of at least the second node.

In an embodiment, the first configuration changes with the quantity of valid TxRUs of the second node.

In an embodiment, the first configuration corresponds to a given quantity of valid TxRUs of the second node.

In an embodiment, the first configuration explicitly corresponds to the given quantity of valid TxRUs of the second node.

In an embodiment, the first configuration implicitly corresponds to the given quantity of valid TxRUs of the second node.

In an embodiment, the first configuration includes configuration information of at least one channel state information (CSI)-reference signal (RS).

In an embodiment, the first configuration includes configuration information related to power of the CSI-RS.

In an embodiment, the first configuration includes configuration information of a CSI-RS energy per resource element (EPRE).

In an embodiment, the first configuration includes a QCL relationship of the CSI-RS.

In an embodiment, the first configuration includes CSI-ResourceConfig.

In an embodiment, the first configuration includes CSI-SSB-ResourceSet.

In an embodiment, the first configuration includes NZP-CSI-RS-ResourceSet.

In an embodiment, the first configuration includes NZP-CSI-RS-Resource.

In an embodiment, the first configuration includes CSI-IM-ResourceSet.

In an embodiment, the first configuration includes CSI-IM-Resource.

In an embodiment, the first configuration includes CSI-ResourceConfig IE.

In an embodiment, the first configuration includes csi-ResourceConfigId.

In an embodiment, the first configuration includes csi-RS-ResourceSetList.

In an embodiment, the first configuration includes SSB-Index.

In an embodiment, the first configuration includes resourceType.

In an embodiment, the first configuration includes nzp-CSI-RS-ResourceSetList.

In an embodiment, the first configuration includes NZP-CSI-RS-ResourceSetId.

In an embodiment, the first configuration includes configuration information of a port.

In an embodiment, the first configuration includes information about a mapping relationship between the port and the TxRU.

In an embodiment, the first configuration depends on the mapping relationship between the port and the TxRU.

In an embodiment, the mapping relationship between the port and the TxRU includes that one port is mapped to at least one TxRU.

In an embodiment, the mapping relationship between the port and the TxRU includes that one port is mapped to one TxRU.

In an embodiment, the mapping relationship between the port and the TxRU includes that one port is mapped to a plurality of TxRUs.

In an embodiment, the first configuration includes configuration information of at least one SS/PBCH block (SSB).

In an embodiment, the first configuration includes configuration information related to power of the SS/PBCH block.

In an embodiment, the first configuration includes configuration information of an SS/PBCH SSS EPRE.

In an embodiment, the first configuration includes a QCL relationship of the SSB.

In an embodiment, the first configuration includes a measurement timing configuration used for SSB measurement.

In a sub-embodiment of this embodiment, a name in the first signaling includes the measurement timing configuration that is used for the SSB measurement and that is indicated by an RRC IE of SSB-MTC.

In a sub-embodiment of this embodiment, one SSB-MTC IE in the first signaling indicates the measurement timing configuration used for the SSB measurement.

In a sub-embodiment of this embodiment, the measurement timing configuration used for the SSB measurement includes an average EPRE of resource elements (REs) that carry a secondary synchronization signal (SSS) used in a network for SSB transmission.

In an embodiment, the first configuration includes a pattern of the SSB.

In a sub-embodiment of this embodiment, a name in the first signaling includes a pattern of an SSB indicated by an RRC IE of SSB-ToMeasure.

In a sub-embodiment of this embodiment, an SSB-ToMeasure IE in the first signaling indicates the pattern of the SSB.

In a sub-embodiment of this embodiment, a bitmap in the first signaling indicates the pattern of the SSB.

In an embodiment, the first configuration includes a periodicity AndOffset field.

In an embodiment, the first configuration includes an RRC field of which name includes periodiciy AndOffset.

In an embodiment, the first configuration includes periodicity.

In an embodiment, the first configuration includes ssb-PositionsInBurst.

In an embodiment, the first configuration indicates a time domain position at which an SS-block is sent within a half frame including the SS/PBCH block.

In an embodiment, the first configuration includes ss-PBCH-BlockPower.

In an embodiment, the first configuration includes PortIndexFor8Ranks.

In an embodiment, the first configuration includes PortIndexFor16Ranks.

In an embodiment, the first configuration includes PortIndexFor64Ranks.

In an embodiment, the first moment is related to a moment at which the first signaling is received.

In an embodiment, the first moment is the moment at which the first signaling is received.

In an embodiment, the first time moment includes a K1^{th} slot after the first signaling is received, where K1 is a positive integer.

In an embodiment, K1 is equal to 28.

In an embodiment, K1 is greater than 1.

In an embodiment, K1 is predefined.

In an embodiment, one slot is a slot.

In an embodiment, one slot is one millisecond.

In an embodiment, one slot is 0.5 milliseconds.

In an embodiment, the phrase, at a first moment after the first signaling is received, may be replaced with: in response to receiving the first signaling.

In an embodiment, the phrase, at a first moment after the first signaling is received, may be replaced with: once the first signaling is received.

In an embodiment, the phrase, at a first moment after the first signaling is received, may be replaced with: when the first signaling is received.

In an embodiment, the phrase, at a first moment after the first signaling is received, may be replaced with: at a K1^{th} slot after the first signaling is received.

In an embodiment, the phrase, at a first moment after the first signaling is received, may be replaced with: at a moment when the first time length in this application has passed after the first signaling is received.

In an embodiment, the phrase, at a first moment after the first signaling is received, may be replaced with: when the first timer in this application expires.

In an embodiment, the first counter is used to count a quantity of first indications.

In an embodiment, the first counter is used to count a quantity of continuously received first indications.

In an embodiment, the first counter is a counter for the first indication.

In an embodiment, an initial value of the first counter is equal to 0.

In an embodiment, the first counter is a counter of the MAC sublayer.

In an embodiment, the first counter is a counter of the RRC sublayer.

In an embodiment, that the first counter is used to monitor the radio link problem includes: The first counter is used for beam failure detection.

In an embodiment, that the first counter is used to monitor the radio link problem includes: The first counter is used for detection of physical layer problems.

In an embodiment, that the first counter is used to monitor the radio link problem includes: The first counter is used for detection of physical layer problems in an RRC_CONNECTED state.

In an embodiment, that the first counter is used to monitor the radio link problem includes: The first counter is used for radio link monitoring.

### Embodiment 2

Embodiment 2 is a schematic diagram of a network architecture according to an embodiment of this application, as shown in FIG. 2. FIG. 2 shows a network architecture 200 of a 5G new radio (NR)/long term evolution (LTE)/long term evolution-advanced (LTE-A) system. The network architecture 200 of the 5G NR/LTE/LTE-A may be referred to as a 5G system (5GS)/an evolved packet system (EPS) 200 or some another suitable term. The 5GS/EPS 200 includes at least one of user equipment (UE) 201, a radio access network (RAN) 202, a 5G core network (5GC)/an evolved packet core (EPC) 210, a home subscriber server (HSS)/unified data management (UDM) 220, and an Internet service 230. The 5GS/EPS may be interconnected to another access network, but for simplicity, these entities/interfaces are not shown. As shown in the figure, the 5GS/EPS provides a packet-switched service. However, a person skilled in the art may easily understand that various concepts presented throughout this application may be extended to a network providing a circuit-switched service or another cellular network. The RAN includes a node 203 and another node 204. The node 203 provides termination of user plane and control plane protocols towards the UE 201. The node 203 may be connected to the another node 204 through an Xn interface (for example, a backhaul)/X2 interface. The node 203 may also be referred to as a base station, a base transceiver station, a radio base station, a radio transceiver, a transceiver function, a basic service set (BSS), an extended service set (ESS), a transmission reception point (TRP), or some another suitable term. The node 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an uncrewed aerial vehicle, an aircraft, a narrow band Internet of Things device, a machine type communication device, a land vehicle, an automobile, a wearable device, or any another similar functional apparatus. A person skilled in the art may also refer to the UE 201 as a mobile station, a subscriber station, a mobile unit, a subscriber unit, a radio unit, a remote unit, a mobile apparatus, a wireless apparatus, a wireless communication apparatus, a remote apparatus, a mobile subscriber station, an access terminal, a mobile terminal, a wireless terminal, a remote terminal, a mobile phone, a user agent, a mobile client, a client, or some another suitable term. The node 203 is connected to the 5GC/EPC 210 through an S1/NG interface. The 5GC/EPC 210 includes a mobility management entity (MME)/an authentication management field (AMF)/a session management function (SMF) 211, another MME/AMF/SMF 214, a service gateway (S-GW)/a user plane function (UPF) 212, and a packet data network gateway (P-GW)/a UPF 213. The MME/AMF/SMF 211 is a control node that processes signaling between the UE 201 and the 5GC/EPC 210. Generally, the MME/AMF/SMF 211 provides bearer and connection management. All user Internet protocol (IP) packets are transmitted through the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes an Internet protocol service corresponding to an operator, and may specifically include the Internet, the intranet, an IP multimedia subsystem (IMS), and a packet-switched streaming service.

In an embodiment, the UE 201 corresponds to a first node in this application.

In an embodiment, the UE 201 is user equipment.

In an embodiment, the UE 201 is a terminal (ender).

In an embodiment, the node 203 corresponds to a second node in this application.

In an embodiment, the node 203 is a base station device (BS).

In an embodiment, the node 203 is a base transceiver station (BTS).

In an embodiment, the node 203 is a NodeB (NB).

In an embodiment, the node 203 is a gNB.

In an embodiment, the node 203 is an eNB.

In an embodiment, the node 203 is an ng-eNB.

In an embodiment, the node 203 is an en-gNB.

In an embodiment, the node 203 is user equipment.

In an embodiment, the node 203 is a relay.

In an embodiment, the node 203 is a gateway.

In an embodiment, the node 203 includes at least one TRP.

In an embodiment, the user equipment supports transmission in a non-terrestrial network (NTN).

In an embodiment, the user equipment supports transmission in a terrestrial network.

In an embodiment, the user equipment supports transmission in a large delay difference network.

In an embodiment, the user equipment supports dual connection (DC) transmission.

In an embodiment, the user equipment includes an aircraft.

In an embodiment, the user equipment includes a vehicle-mounted terminal.

In an embodiment, the user equipment includes a boat.

In an embodiment, the user equipment includes an Internet of things terminal.

In an embodiment, the user equipment includes a terminal of the industrial Internet of Things.

In an embodiment, the user equipment includes a device supporting low-delay high-reliability transmission.

In an embodiment, the user equipment includes a test device.

In an embodiment, the user equipment includes a signaling tester.

In an embodiment, the user equipment supports NR.

In an embodiment, the user equipment supports UTRA.

In an embodiment, the user equipment supports EUTRA.

In an embodiment, the base station device supports transmission in the non-terrestrial network.

In an embodiment, the base station device supports transmission in the large delay difference network.

In an embodiment, the base station device supports transmission in the terrestrial network.

In an embodiment, the base station device includes a macro cellular base station.

In an embodiment, the base station device includes a micro cell base station.

In an embodiment, the base station device includes a pico cell base station.

In an embodiment, the base station device includes a femtocell.

In an embodiment, the base station device includes a base station device supporting a large delay difference.

In an embodiment, the base station device includes a flight platform device.

In an embodiment, the base station device includes a satellite device.

In an embodiment, the base station device includes a transmission reception point (Transmitter Receiver Point, TRP).

In an embodiment, the base station device includes a centralized unit (CU).

In an embodiment, the base station device includes a distributed unit (DU).

In an embodiment, the base station device includes the test device.

In an embodiment, the base station device includes the signaling tester.

In an embodiment, the base station device includes an integrated access and backhaul (IAB)-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay includes a relay.

In an embodiment, the relay includes an L3 relay.

In an embodiment, the relay includes an L2 relay.

In an embodiment, the relay includes a router.

In an embodiment, the relay includes a switch.

In an embodiment, the relay includes user equipment.

In an embodiment, the relay includes a base station device.

### Embodiment 3

Embodiment 3 is a schematic diagram of an embodiment of radio protocol architectures of a user plane and a control plane according to this application, as shown in FIG. 3. FIG. 3 is a schematic diagram of an embodiment of radio protocol architectures used for the user plane 350 and the control plane 300. FIG. 3 presents a radio protocol architecture used for the control plane 300 by using three layers: a layer 1, a layer 2, and a layer 3. The layer 1 (a layer L1) is a lowest layer and implements various signal processing functions for a physical layer (PHY). The layer L1 is referred to as PHY 301 in this specification. The layer 2 (a layer L2) 305 is above the PHY 301, and includes a medium access control (MAC) sublayer 302, a radio link control (RLC) sublayer 303, and a packet data convergence protocol (PDCP) sublayer 304. The PDCP sublayer 304 provides multiplexing between different radio bearers and logical channels. The PDCP sublayer 304 further provides security by encrypting a data packet, and provides cross-region mobility support. The RLC sublayer 303 provides segmentation and rearrangement of an upper-layer data packet, retransmission of a lost data packet, and reordering of data packets to compensate for unordered reception caused by a HARQ. The MAC sublayer 302 provides multiplexing between a logic channel and a transport channel. The MAC sublayer 302 is further responsible for allocating various radio resources (for example, resource blocks) in a cell. The MAC sublayer 302 is further responsible for a HARQ operation. A radio resource control (RRC) sublayer 306 in the layer 3 (a layer L3) in the control plane 300 is responsible for obtaining a radio resource (that is, a radio bearer) and configuring a lower layer by using RRC signaling. A radio protocol architecture of the user plane 350 includes a layer 1 (a layer L1) and a layer 2 (a layer L2). The radio protocol architecture of the user plane 350 includes a physical layer 351, a PDCP sublayer 354 in the layer L2 355, an RLC sublayer 353 in the layer L2 355, and a MAC sublayer 352 in the layer L2 355 that are substantially the same as corresponding layers and sublayers in the control plane 300. However, the PDCP sublayer 354 further provides header compression for the upper-layer data packet to reduce radio transmission overheads. The layer L2 355 in the user plane 350 further includes a service data adaptation protocol (SDAP) sublayer 356. The SDAP sublayer 356 is responsible for mapping between a QoS flow and a data radio bearer (DRB), to support diversity of a service.

In an embodiment, the wireless protocol architecture in FIG. 3 is applicable to a first node in this application.

In an embodiment, the radio protocol architecture in FIG. 3 is applicable to a second node in this application.

In an embodiment, first signaling in this application is generated from the RRC 306.

In an embodiment, the first signaling in this application is generated from the MAC 302 or the MAC 352.

In an embodiment, the first signaling in this application is generated from the PHY 301 or the PHY 351.

In an embodiment, the second signaling in this application is generated from the RRC 306.

In an embodiment, the second signaling in this application is generated from the MAC 302 or the MAC 352.

In an embodiment, the second signaling in this application is generated from the PHY 301 or the PHY 351.

In an embodiment, first indication in this application is sent by the PHY 301 or the PHY 351.

In an embodiment, the first indication in this application is received by the RRC 306.

In an embodiment, the first indication in this application is received by the MAC 302 or the MAC 352.

### Embodiment 4

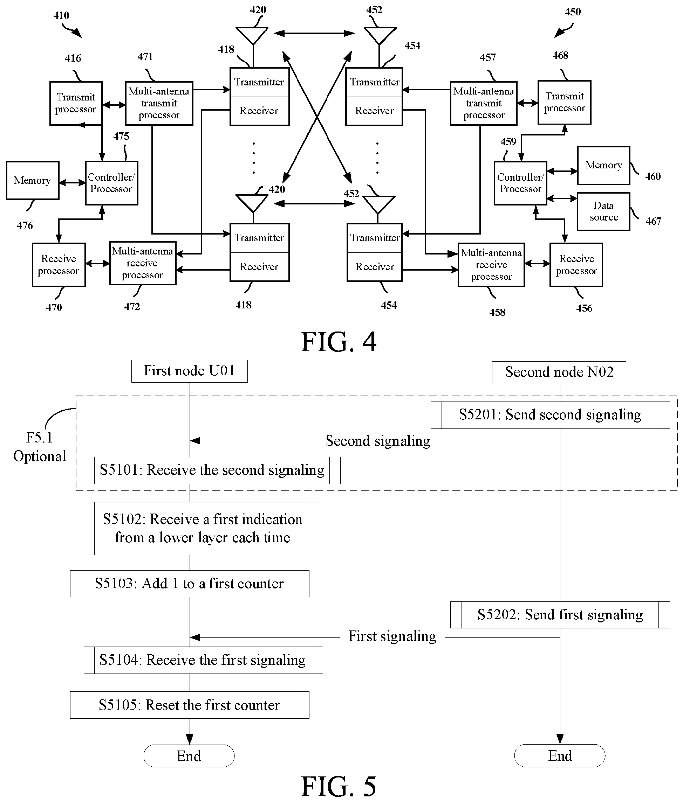

Embodiment 4 is a schematic diagram of a first communication device and a second communication device according to an embodiment of this application, as shown in FIG. 4. FIG. 4 is a block diagram of the first communication device 450 and the second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, transmitters/receivers 454, and antennas 452.

The second communication device 410 includes a controller/processor 475, a memory 476, a receive processor 470, a transmit processor 416, a multi-antenna receive processor 472, a multi-antenna transmit processor 471, transmitters/receivers 418, and antennas 420.

During transmission from the second communication device 410 to the first communication device 450, at the second communication device 410, an upper-layer data packet from a core network is provided for the controller/processor 475. The controller/processor 475 implements functionality of a layer L2. During the transmission from the second communication device 410 to the first communication device 450, the controller/processor 475 provides header compression, encryption, packet segmentation and reordering, multiplexing between a logical channel and a transport channel, and radio resource allocation to the first communication device 450 based on various priority measures. The controller/processor 475 is further responsible for retransmission of a lost packet and signaling to the first communication device 450. The transmit processor 416 and the multi-antenna transmit processor 471 implement various signal processing functions for a layer L1 (that is, a physical layer). The transmit processor 416 implements coding and interleaving to promote forward error correction (FEC) at the second communication device 410, and mapping of a signal cluster based on various modulation schemes (for example, binary phase shift keying (BPSK), orthogonal phase shift keying (QPSK), M-phase shift keying (M-PSK), and M-orthogonal amplitude modulation (M-QAM)). The multi-antenna transmit processor 471 performs digital space precoding on a coded and modulated symbol, including codebook-based precoding and non-codebook-based precoding, and beam forming processing, to generate one or more spatial streams. Then, the transmit processor 416 maps each spatial stream to a sub-carrier, and multiplexes the spatial stream with a reference signal (for example, a pilot) in time domain and/or frequency domain, and then uses inverse fast Fourier transform (IFFT) to generate a physical channel carrying a time domain multi-carrier symbol stream. Then, the multi-antenna transmit processor 471 performs an analog precoding sending operation/a beam forming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During the transmission from the second communication device 410 to the first communication device 450, at the first communication device 450, each receiver 454 receives a signal through a corresponding antenna 452 thereof. Each receiver 454 recovers information modulated onto a radio frequency carrier, converts the radio frequency stream into a baseband multi-carrier symbol stream, and provides the baseband multi-carrier symbol stream to the receive processor 456. The receive processor 456 and the multi-antenna receive processor 458 implement various signal processing functions for the layer L1. The multi-antenna receive processor 458 performs an analog precoding receiving operation/a beam forming operation on the baseband multi-carrier symbol stream from the receiver 454. The receive processor 456 converts, from time domain to frequency domain by using fast Fourier transform (FFT), the baseband multi-carrier symbol stream on which the analog precoding receiving operation/the beam forming operation is performed. In frequency domain, a physical layer data signal and a reference signal are demultiplexed by the receive processor 456, where the reference signal is used for channel estimation, and after multi-antenna detection is performed on the data signal in the multi-antenna receive processor 458, any spatial stream destined for the first communication device 450 is recovered. A symbol in each spatial stream is demodulated and recovered in the receive processor 456, and a soft decision is generated. Then, the receive processor 456 decodes and deinterleaves the soft decision to recover upper-layer data and a control signal transmitted by the second communication device 410 on the physical channel. Then, the upper-layer data and the control signal are provided for the controller/processor 459. The controller/processor 459 implements a function of the layer L2. The controller/processor 459 may be associated with the memory 460 that stores program code and data. The memory 460 may be referred to as a computer-readable medium. During the transmission from the second communication device 410 to the second communication device 450, the controller/processor 459 provides demultiplexing between the transport channel and the logical channel, packet rearrangement, decryption, header decompression, and control signal processing to recover the upper-layer data packet from the core network. Then, the upper-layer data packet is provided to all protocol layers above the layer L2. Various control signals may also be provided for L3 for processing of L3.

During the transmission from the first communication device 450 to the second communication device 410, the data source 467 is used at the first communication device 450 to provide the upper-layer data packet for the controller/processor 459. The data source 467 indicates all the protocol layers above the layer L2. Similar to a sending function of the second communication device 410 described in the transmission from the second communication device 410 to the first communication device 450, the controller/processor 459 implements header compression, encryption, packet segmentation and reordering, and multiplexing between the logical channel and the transport channel based on radio resource allocation, to implement a function of the layer L2 for the user plane and the control plane. The controller/processor 459 is further responsible for retransmission of a lost packet and signaling to the second communication device 410. The transmit processor 468 performs modulation mapping and channel coding. The multi-antenna transmit processor 457 performs digital multi-antenna space precoding, including codebook-based precoding and non-codebook-based precoding, and beam forming. Then, the transmit processor 468 modulates a generated spatial stream into a multi-carrier/single-carrier symbol stream. After performing an analog precoding operation/a beam forming operation in the multi-antenna transmit processor 457, the multi-antenna transmit processor 457 provides the multi-carrier/single-carrier symbol stream to the different antennas 452 through the transmitter 454. Each transmitter 454 first converts a baseband symbol stream provided by the multi-antenna transmit processor 457 into a radio frequency symbol stream, and then provides the radio frequency symbol stream to the antenna 452.

During the transmission from the first communication device 450 to the second communication device 410, a function of the second communication device 410 is similar to a receiving function of the first communication device 450 described in the transmission from the second communication device 410 to the first communication device 450. Each receiver 418 receives a radio frequency signal through a corresponding antenna 420 thereof, converts the received radio frequency signal into a baseband signal, and provides the baseband signal for the multi-antenna receive processor 472 and the receive processor 470. The receive processor 470 and the multi-antenna receive processor 472 jointly implement the function of the layer L1. The controller/processor 475 implements the function of the layer L2. The controller/processor 475 may be associated with the memory 476 that stores program code and data. The memory 476 may be referred to as a computer-readable medium. During the transmission from the first communication device 450 to the second communication device 410, the controller/processor 475 provides demultiplexing between the transport channel and the logical channel, packet rearrangement, decryption, header decompression, and control signal processing to recover the upper-layer data packet from UE 450. The upper-layer data packet from the controller/processor 475 may be provided for the core network.

In an embodiment, the first communication device 450 includes: at least one processor and at least one memory. The at least one memory includes computer program code. The at least one memory and the computer program code are configured to be used with the at least one processor, and the first communication device 450 at least: receives a first indication from a lower layer each time, and adds 1 to a first counter; receives first signaling; and resets the first counter at a first moment after the first signaling is received. The lower layer includes a physical layer, the first signaling indicates a first configuration, the first configuration depends on a quantity of valid TxRUs of at least a second node, and the first counter is used to monitor a radio link problem.

In an embodiment, the first communication device 450 includes: a memory storing a program of computer-readable instructions. The program of computer-readable instructions generates actions when being executed by at least one processor, and the actions include: receiving a first indication from a lower layer each time, and adding 1 to a first counter; receiving first signaling; and resetting the first counter at a first moment after the first signaling is received. The lower layer includes a physical layer, the first signaling indicates a first configuration, the first configuration depends on a quantity of valid TxRUs of at least a second node, and the first counter is used to monitor a radio link problem.

In an embodiment, the second communication device 410 includes: at least one processor and at least one memory. The at least one memory includes computer program code. The at least one memory and the computer program code are configured to be used with the at least one processor. The second communication device 410 at least: sends first signaling. A first indication is received from a lower layer each time, 1 is added to a first counter, the first counter is reset at a first moment after the first signaling is received, the lower layer includes a physical layer, the first signaling indicates a first configuration, the first configuration depends on a quantity of valid TxRUs of at least a second node, and the first counter is used to monitor a radio link problem.

In an embodiment, the second communication device 410 includes: a memory storing a program of computer-readable instructions. The program of computer-readable instructions generates actions when being executed by at least one processor, and the actions include: sending first signaling. A first indication is received from a lower layer each time, 1 is added to a first counter, the first counter is reset at a first moment after the first signaling is received, the lower layer includes a physical layer, the first signaling indicates a first configuration, the first configuration depends on a quantity of valid TxRUs of at least a second node, and the first counter is used to monitor a radio link problem.

In an embodiment, the antenna 452, the receiver 454, the receive processor 456, and the controller/processor 459 are used to receive the first signaling. At least one of the antenna 420, the transmitter 418, the transmit processor 416, and the controller/processor 475 is configured to send the first signaling.

In an embodiment, the antenna 452, the receiver 454, the receive processor 456, and the controller/processor 459 are used to receive the second signaling. At least one of the antenna 420, the transmitter 418, the transmit processor 416, and the controller/processor 475 is used to send the second signaling.

In an embodiment, the first communication device 450 corresponds to a first node in this application.

In an embodiment, the second communication device 410 corresponds to a second node in this application.

In an embodiment, the first communication device 450 is user equipment.

In an embodiment, the first communication device 450 is a base station device.

In an embodiment, the first communication device 450 is a relay device.

In an embodiment, the second communication device 410 is a base station device (gNB/eNB/ng-eNB).

In an embodiment, the second communication device 410 is user equipment.

In an embodiment, the second communication device 410 is a relay device.

### Embodiment 5

Embodiment 5 is a transmission flowchart of a radio signal according to an embodiment of this application, as shown in FIG. 5. A dashed-line box F5.1 is optional. It should be particularly noted that a sequence in this example does not limit a signal transmission sequence and implementation sequence in this application.

For a **first node U01,** in step S5101, second signaling is received, where the second signaling indicates a first candidate configuration set. In step S5102, a first indication is received from a lower layer each time. In step S5103, 1 is added to a first counter. In step S5104, first signaling is received. In step S5105, the first counter is reset.

For a **second node N02,** in step S5201, the second signaling is sent. In step S5202, the first signaling is sent.

In Embodiment 5, the first candidate configuration set includes at least two candidate configurations, the first configuration is one candidate configuration in the first candidate configuration set, quantities of valid TxRUs of second nodes corresponding to the at least two candidate configurations in the first candidate configuration set are different, the first signaling indicates the first configuration in the first candidate configuration set; the lower layer includes a physical layer, the first signaling indicates a first configuration, the first configuration depends on a quantity of valid TxRUs of at least a second node, and the first counter is used to monitor a radio link problem.

Typically, the first node U01 is user equipment, and the second node N02 is a base station device.

Typically, the first node U01 is user equipment, and the second node N02 is user equipment.

Typically, the first node U01 is a base station device, and the second node N02 is a base station device.

In an embodiment, the first node U01 receives a broadcast control channel (BCCH) through the second node N02.

In an embodiment, the first node U01 receives a system information block (SIB) through the second node N02.

In an embodiment, the second node N02 is a maintenance base station of a serving cell of the first node U01.

In an embodiment, the second node N02 is a TRP.

In an embodiment, the dashed-line box F5.1 is optional.

In a sub-embodiment of this embodiment, the dashed-line box F5.1 exists.

In a sub-embodiment of this embodiment, the dashed-line box F5.1 does not exist.

In an embodiment, the first candidate configuration set is configured for an SpCell of the first node.

In an embodiment, the first candidate configuration set is configured for an SCell of the first node.

In an embodiment, the second signaling includes a broadcast message.

In an embodiment, the second signaling includes a unicast message.

In an embodiment, the second signaling is a broadcast message.

In an embodiment, the second signaling includes at least one RRC message, and the first signaling is a MAC CE.

In an embodiment, the second signaling includes at least one RRC message, and the first signaling is a piece of DCI.

In an embodiment, the second signaling includes at least one RRC message, and the first signaling is one of the at least one RRC message.

In an embodiment, the second signaling is transmitted through the BCCH.

In an embodiment, the second signaling includes a SIB1 message.

In an embodiment, the second signaling includes a SystemInformation message.

In an embodiment, the second signaling includes a SIB.

In an embodiment, the second signaling includes an RRCReconfiguration message.

In an embodiment, the second signaling includes a configuration list, and each entry in the configuration list indicates one candidate configuration in the first candidate configuration set.

In a sub-embodiment of this embodiment, each entry in the configuration list corresponds to one configuration identifier.

In a sub-embodiment of this embodiment, one configuration identifier is configured for each entry in the configuration list.

In a sub-embodiment of this embodiment, a maximum value of the configuration identifier is predefined.

In a sub-embodiment of this embodiment, a maximum value of the configuration identifier is configurable.

In a sub-embodiment of this embodiment, the maximum value of the configuration identifier is 64.

In a sub-embodiment of this embodiment, the maximum value of the configuration identifier is 8.

In a sub-embodiment of this embodiment, the maximum value of the configuration identifier is 4.

In an embodiment, the first signaling belongs to the second signaling.

In an embodiment, the first signaling does not belong to the second signaling.

In an embodiment, a receiving moment of the first signaling is not earlier than a receiving moment of the second signaling.

In an embodiment, the receiving moment of the first signaling is not earlier than a receiving moment of a last RRC message in the second signaling.

In an embodiment, the receiving moment of the first signaling is later than the receiving moment of the second signaling.

In an embodiment, the first signaling explicitly indicates the first configuration in the first candidate configuration set.

In an embodiment, the first signaling implicitly indicates the first configuration in the first candidate configuration set.

In an embodiment, the first signaling indicates an index of the first configuration in the first candidate configuration set.

In an embodiment, the first signaling indicates an identifier of the first configuration in the first candidate configuration set.

In an embodiment, the first signaling indicates a sequence of first configurations in the first candidate configuration set.

In an embodiment, the first signaling indicates a configuration identifier of the first configuration in the first candidate configuration set.

In an embodiment, the first signaling indicates a quantity of valid TxRUs of the second node corresponding to the first configuration.

In an embodiment, the first candidate configuration set is a set related to the quantity of valid TxRUs of the second node.

In an embodiment, quantities of valid TxRUs of the second node corresponding to any two candidate configurations in the first candidate configuration set are different.

In an embodiment, the quantities of valid TxRUs of the second nodes corresponding to at least two candidate configurations in the first candidate configuration set are the same.

In an embodiment, valid TxRUs of the second node corresponding to any two candidate configurations in the first candidate configuration set are different.

In an embodiment, sets of valid TxRUs of the second node corresponding to any two candidate configurations in the first candidate configuration set are different.

In an embodiment, the quantities of valid TxRUs of the second node corresponding to any two candidate configurations in the first candidate configuration set are the same, but the sets of valid TxRUs are different.

In an embodiment, the quantities of valid TxRUs of the second node corresponding to any two candidate configurations in the first candidate configuration set are the same, but the valid TxRUs are different.

In an embodiment, mapping relationships between a port and a TxRU of the second node corresponding to any two candidate configurations in the first candidate configuration set are different.

In an embodiment, power of downlink reference signals sent by the second node corresponding to any two candidate configurations in the first candidate configuration set is different.

In an embodiment, the power of the downlink reference signals sent by the second node corresponding to any two candidate configurations in the first candidate configuration set is the same.

In an embodiment, the downlink reference signal includes a CSI-RS.

In an embodiment, the downlink reference signal includes an SS/PBCH block.

In an embodiment, each candidate configuration in the first candidate configuration set is periodically valid.

In an embodiment, at least one candidate configuration in the first candidate configuration set is dynamically triggered.

In an embodiment, one candidate configuration in the first candidate configuration set is dynamically triggered.

In an embodiment, each candidate configuration in the first candidate configuration set is dynamically triggered.

In an embodiment, validity of one candidate configuration in the first candidate configuration set is indicated by signaling other than the second signaling.

In an embodiment, validity of the first configuration is indicated by the first signaling.

In an embodiment, the first configuration is any candidate configuration in the first candidate configuration set.

In an embodiment, the first configuration is a given candidate configuration in the first candidate configuration set.

In an embodiment, the first configuration is a candidate configuration that is in the first candidate configuration set and that is indicated by the first signaling.

### Embodiment 6

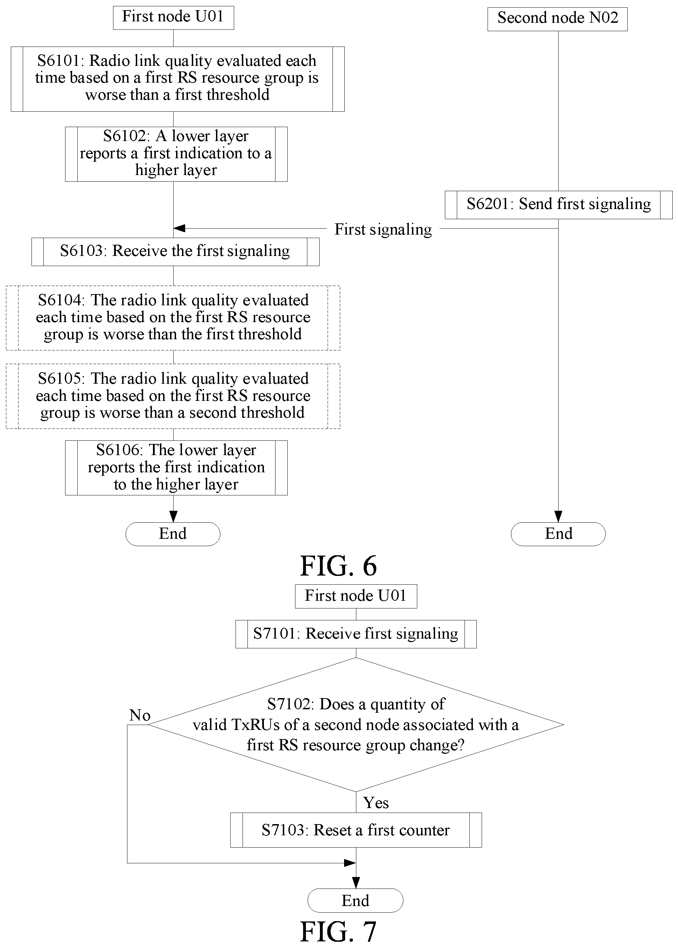

Embodiment 6 is a transmission flowchart of a radio signal according to another embodiment of this application, as shown in FIG. 6. It should be particularly noted that a sequence in this example does not limit a signal transmission sequence and implementation sequence in this application.

For **a first node U01,** in step S6101, radio link quality evaluated each time based on a first RS resource group is worse than a first threshold. In step S6102, a lower layer reports a first indication to a higher layer. In step S6103, first signaling is received. In step S6104, the radio link quality evaluated each time based on the first RS resource group is worse than the first threshold. In step S6105, the radio link quality evaluated each time based on the first RS resource group is worse than a second threshold. In step S6106, the lower layer reports the first indication to the higher layer.

For a **second node N02,** in step S6201, the first signaling is sent.

In Embodiment 6, the first RS resource group includes at least one RS resource. The higher layer is a protocol layer above a physical layer, and the first threshold is different from the second threshold.

In an embodiment, step S6104 is optional.

In an embodiment, step S6105 is optional.

In an embodiment, one of step S6104 and step S6105 is performed.

In an embodiment, step S6104 is performed, and step S6105 is not performed.

In an embodiment, step S6104 is not performed, and step S6105 is performed.

In an embodiment, at least one RS resource in the first RS resource group includes an SSB.

In an embodiment, at least one RS resource in the first RS resource group includes a CSI-RS.

In an embodiment, the higher layer is a MAC layer.

In an embodiment, the higher layer is an RRC layer.

In an embodiment, the first threshold is an RSRP threshold.

In an embodiment, the first threshold is a block error rate (BLER) threshold.

In an embodiment, the first threshold is configurable.

In an embodiment, the first threshold is preconfigured.

In an embodiment, the first threshold is configured by using an rlmInSyncOutOfSyncThreshold field.

In an embodiment, the first threshold is Q_{out, LR}.

In an embodiment, the lower layer reports, before a first moment, the first indication to the higher layer each time the radio link quality evaluated based on the first RS resource group is worse than the first threshold.

In an embodiment, before and after the first moment, the first RS resource group remains unchanged.

In an embodiment, before and after the first moment, at least one RS resource in the first RS resource group remains unchanged.

In an embodiment, before and after the first moment, the at least one RS resource in the first RS resource group changes.

In an embodiment, before and after the first moment, an index of at least one RS resource in the first RS resource group remains unchanged.

In an embodiment, before and after the first moment, the index of at least one RS resource in the first RS resource group changes.

In an embodiment, before and after the first moment, a quantity of RS resources included in the first RS resource group remains unchanged.

In an embodiment, before and after the first moment, the quantity of RS resources included in the first RS resource group changes.

In an embodiment, before and after the first moment, an SSB associated with at least one RS resource in the first RS resource group remains unchanged.

In an embodiment, before and after the first moment, the SSB associated with at least one RS resource in the first RS resource group changes.

In an embodiment, before and after the first moment, a CSI-RS associated with at least one RS resource in the first RS resource group remains unchanged.

In an embodiment, before and after the first moment, a periodicity of at least one RS resource in the first RS resource group remains unchanged.

In an embodiment, before and after the first moment, the periodicity of at least one RS resource in the first RS resource group changes.

In an embodiment, the first RS resource group is configured for a DL BWP.

In an embodiment, the first RS resource group is configured for an active DL BWP.

In an embodiment, the first RS resource group is configured for an initial DL BWP.

In an embodiment, the first RS resource group is configured for a default DL BWP.

In an embodiment, the first RS resource group is configured for a DL BWP of an SpCell of the first node.

In an embodiment, the first RS resource group is configured for a DL BWP of an SCell of the first node.

In an embodiment, the first RS resource group is q̅₀.

In an embodiment, the first RS resource group is q̅_{0,0}.

In an embodiment, the first RS resource group is q̅_{0,1}.

In an embodiment, any RS resource in the first RS resource group is an SSB.

In an embodiment, any RS resource in the first RS resource group is a CSI-RS.

In an embodiment, any RS resource in the first RS resource group is configured by using an RRC message.

In a sub-embodiment of this embodiment, failureDetectionResourcesToAddModList is used to configure RS resources in the first RS resource group.

In a sub-embodiment of this embodiment, candidateBeamRSList, candidateBeamRSListExt, or candidateBeamRSSCellList is used to configure the RS resources in the first RS resource group.

In a sub-embodiment of this embodiment, failureDetectionSet1 or failureDetectionSet2 is used to configure the RS resources in the first RS resource group.

In a sub-embodiment of this embodiment, second signaling is used to determine the first RS resource group.

In a sub-embodiment of this embodiment, an RRC message in the second signaling is used to determine the first RS resource group.

In an embodiment, any RS resource in the first RS resource group is configured by using the RRC message, and any RS resource in the first RS resource group is indicated by a MAC CE.

In a sub-embodiment of this embodiment, failureDetectionSet1 or failureDetectionSet2 is used to configure the RS resources in the first RS resource group.

In a sub-embodiment of this embodiment, a BFD-RS Indication MAC CE is used to indicate the RS resources in the first RS resource group.

In an embodiment, any RS resource in the first RS resource group is determined by UE.

In a sub-embodiment of this embodiment, any RS resource in the first RS resource group is not configured by using failureDetectionResourcesToAddModList.

In a sub-embodiment of this embodiment, any RS resource in the first RS resource group is a periodic CSI-RS resource.

In a sub-embodiment of this embodiment, a TCI-State corresponding to CORESET used by the first node to monitor a PDCCH indicates any RS resource in the first RS resource group.

In a sub-embodiment of this embodiment, any RS resource in the first RS resource group is an RS resource whose qcl-Type is set to 'typeD'.

In an embodiment, the first RS resource group is associated with a single-port.

In an embodiment, the first RS resource group is associated with a two-port.

In an embodiment, the first RS resource group is associated with at least one port.

In an embodiment, the first RS resource group is associated with at least one port RS.

In an embodiment, the first RS resource group is associated with one port.

In an embodiment, the first RS resource group is associated with one port RS.

In an embodiment, the port is a port.

In an embodiment, the port is an antenna port.

In an embodiment, the port is a virtual port.

In an embodiment, the port is a DMRS port.

In an embodiment, the port is a CSI-RS port.

In an embodiment, the port is a reference signal port.

In an embodiment, the first RS resource group is not reset within a time interval before the first moment and a time interval after the first moment.

In an embodiment, the first RS resource group is not reconfigured within the time interval before the first moment and the time interval after the first moment.

In an embodiment, the lower layer reports, after the first moment, the first indication to the higher layer each time the radio link quality evaluated based on the first RS resource group is worse than the first threshold.

In an embodiment, the second threshold is an RSRP threshold.

In an embodiment, the second threshold is a BLER threshold.

In an embodiment, the second threshold is configurable.

In an embodiment, the second threshold is preconfigured.

In an embodiment, the second threshold is configured by using an rlmInSyncOutOfSyncThreshold field.

In an embodiment, the second threshold is Q_{out, LR}.

In an embodiment, the first threshold is equal to the second threshold.

In an embodiment, the first threshold is not equal to the second threshold.

In an embodiment, the first threshold and the second threshold are configured by using different RRC fields.

In an embodiment, the lower layer reports, after the first moment, the first indication to the higher layer each time the radio link quality evaluated based on the first RS resource group is worse than the second threshold.

In an embodiment, the first configuration includes configuration information of at least one RS resource in the first RS resource group.

In an embodiment, the first configuration is used to determine one RS resource in the first RS resource group and a first SSB QCL.

In an embodiment, at the first moment after the first signaling is received, the first counter is reset when at least a configuration of the port associated with the first RS group changes.

In an embodiment, at the first moment after the first signaling is received, the first counter is reset when at least the configuration of the port associated with the first RS group changes.

In an embodiment, the first signaling is used to determine that at least one TxRU corresponding to the port associated with the first RS resource group is off.

In an embodiment, the first signaling is used to determine that the at least one TxRU corresponding to the port associated with the first RS resource group is on.

In an embodiment, the first signaling is used to determine that the at least one TxRU corresponding to the port associated with the first RS resource group is enabled.

In an embodiment, the first signaling is used to determine that the at least one TxRU corresponding to the port associated with the first RS resource group is disabled.

In an embodiment, the first signaling is used to determine that a quantity of valid TxRUs corresponding to the port associated with the first RS resource group changes.

In an embodiment, the first signaling is used to determine that the configuration corresponding to the port associated with the first RS resource group changes.

### Embodiment 7

Embodiment 7 is a transmission flowchart of a radio signal according to still another embodiment of this application, as shown in FIG. 7.

For a **first node U01,** in step S7101, first signaling is received. In step S7102, it is determined whether a quantity of valid TxRUs of a second node associated with a first RS resource group changes. In step S7101, if a determining result is yes, a first counter is reset in step S7103. In step S7101, if a determining result is no, step S7103 is not performed.

In Embodiment 7, the first counter is reset at a first moment after the first signaling is received. The first signaling indicates a first configuration, the first configuration depends on a quantity of valid TxRUs of at least the second node, the first counter is used to monitor a radio link problem, and at the first moment after the first signaling is received, the first counter is reset when at least the quantity of valid TxRUs of the second node associated with the first RS resource group changes.

In an embodiment, at the first moment after the first signaling is received, the first counter is reset if the quantity of valid TxRUs of the second node associated with the first RS resource group changes.

In an embodiment, at the first moment after the first signaling is received, the first counter is reset if the quantity of valid TxRUs of the second nodes associated with the first RS resource group increases.

In an embodiment, at the first moment after the first signaling is received, the first counter is reset if the quantity of valid TxRUs of the second node associated with the first RS resource group decreases.

In an embodiment, at the first moment after the first signaling is received, the first counter is reset if the quantity of valid TxRUs of the second node associated with the first RS resource group changes to 0.

In an embodiment, the quantity of valid TxRUs of the second node associated with the first RS resource group includes: a quantity of valid TxRUs of the second node associated with a port associated with the first RS resource group.

In an embodiment, before the first moment, the quantity of valid TxRUs of the second node associated with the port associated with the first RS resource group is M, and after the first moment, the quantity of valid TxRUs of the second node associated with the port associated with the first RS resource group is N.

In an embodiment, M is an integer.

In an embodiment, M is a non-negative integer.

In an embodiment, M is a positive integer.

In an embodiment, N is an integer.

In an embodiment, N is a non-negative integer.

In an embodiment, N is a positive integer.

In an embodiment, M is not equal to N.

In an embodiment, that the quantity of valid TxRUs of the second node associated with the first RS resource group changes includes: The quantity of valid TxRUs of the second node associated with the port associated with the first RS resource group changes.

In an embodiment, that the quantity of valid TxRUs of the second node associated with the first RS resource group changes includes: The quantity of valid TxRUs of the second node associated with the port associated with the first RS resource group increases.

In an embodiment, that the quantity of valid TxRUs of the second node associated with the first RS resource group changes includes: The quantity of valid TxRUs of the second node associated with the port associated with the first RS resource group decreases.

In an embodiment, that the quantity of valid TxRUs of the second node associated with the first RS resource group changes includes: Transmit power of the first RS resource group changes.

In an embodiment, that the quantity of valid TxRUs of the second node associated with the first RS resource group changes includes: The transmit power of the first RS resource group increases.

In an embodiment, that the quantity of valid TxRUs of the second node associated with the first RS resource group changes includes: The transmit power of the first RS resource group reduces.

In an embodiment, before and after the first moment, the port associated with the first RS resource group remains unchanged.

In an embodiment, before and after the first moment, the quantity of valid TxRUs of the second node associated with the port associated with the first RS resource group is not equal to 0.

In an embodiment, the first signaling is used to determine that the port associated with the first RS resource group is deactivated, to determine to reset the first counter.

In an embodiment, the first signaling is used to determine that the port associated with the first RS resource group is off, to determine to reset the first counter.

### Embodiment 8

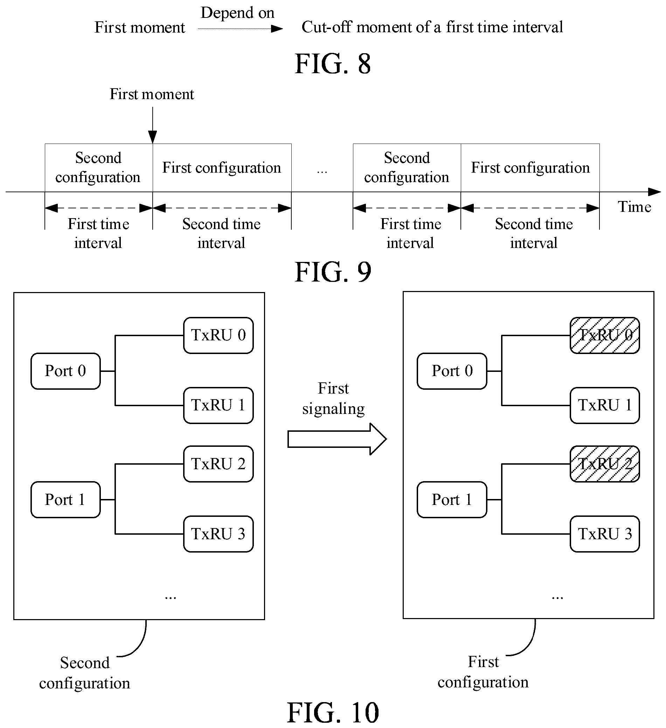

Embodiment 8 is a schematic diagram of a relationship between a first moment and a cut-off moment of a first time interval according to an embodiment of this application, as shown in FIG. 8.

In Embodiment 8, first signaling indicates a first time length, the first time length is used to determine the first time interval, and the first moment depends on the cut-off moment of the first time interval.

In an embodiment, the first signaling is used to determine a start moment of the first time interval and an end moment of the first time interval.

In an embodiment, the first time interval is a running time interval of a first timer.

In an embodiment, the cut-off moment of the first time interval is an expiration moment of the first timer.

In an embodiment, the first timer is a timer.

In an embodiment, the first timer expires when running time of the first timer reaches the first time length.

In an embodiment, the first timer is started at the start moment of the first time interval.

In an embodiment, at the start moment of the first time interval, the first timer is started, and the first timer is set to the first time length.

In an embodiment, the first timer is restarted at the start moment of the first time interval.

In an embodiment, at the start moment of the first time interval, the first timer is restarted, and the first timer is set to the first time length.

In an embodiment, the first time length is a time length of the first time interval.

In an embodiment, a time length from the start moment of the first time interval to the cut-off moment of the first time interval is not less than the first time length.

In an embodiment, the time length from the start moment of the first time interval to the cut-off moment of the first time interval is equal to the first time length.

In an embodiment, the first time length is configurable.

In an embodiment, the first time length is preconfigured.

In an embodiment, the first moment is not earlier than the cut-off moment of the first time interval.

In an embodiment, the first moment is later than the cut-off moment of the first time interval.

In an embodiment, the first moment is equal to the cut-off moment of the first time interval.

### Embodiment 9

Embodiment 9 is a schematic diagram of a time relationship of each candidate configuration in a first candidate configuration set according to an embodiment of this application, as shown in FIG. 9. In FIG. 9, a horizontal axis represents time, a first time interval and a second time interval are two time intervals that do not overlap in time domain, the first time interval corresponds to a second configuration, and the second time interval corresponds to a first configuration.

In an embodiment, the second time interval and the first time interval are contiguous in time domain.

In an embodiment, a time interval is included between the second time interval and the first time interval.

In an embodiment, the second configuration is a candidate configuration in the first candidate configuration set. The second configuration depends on a quantity of valid TxRUs of at least a second node. A quantity of valid TxRUs of the second node corresponding to the second configuration is different from a quantity of valid TxRUs of the second node corresponding to the first configuration.

In an embodiment, first signaling is used to determine a start moment of the first time interval and an end moment of the first time interval.

In an embodiment, the first time interval corresponds to the second configuration, and the second configuration is a candidate configuration in the first candidate configuration set.

In an embodiment, the first time interval is used to determine a valid time interval of the second configuration.

In an embodiment, the first moment is used to determine a failure moment of the second configuration.

In an embodiment, the first moment is used to determine a valid moment of the first configuration.

In an embodiment, the first time interval is a running time interval of a first timer.

In an embodiment, the cut-off moment of the first time interval is an expiration moment of the first timer.

In an embodiment, the first timer expires when running time of the first timer reaches a first time length.

In an embodiment, the phrase, at a first moment after the first signaling is received, may be replaced with: when the first timer expires.

In an embodiment, the first timer is started at the start moment of the first time interval.

In an embodiment, at the start moment of the first time interval, the first timer is started, and the first timer is set to the first time length.

In an embodiment, the first timer is restarted at the start moment of the first time interval.

In an embodiment, at the start moment of the first time interval, the first timer is restarted, and the first timer is set to the first time length.

In an embodiment, the first time length is a time length of the first time interval.

In an embodiment, a time length from the start moment of the first time interval to the cut-off moment of the first time interval is not less than the first time length.

In an embodiment, the time length from the start moment of the first time interval to the cut-off moment of the first time interval is equal to the first time length.

In an embodiment, the first time length is configurable.

In an embodiment, the first time length is preconfigured.

In an embodiment, before the first moment, the second configuration is used.

In an embodiment, after the first moment, the first configuration is used.

In an embodiment, after the first moment, the first configuration is valid.

In an embodiment, the second time interval corresponds to the first configuration, and the first configuration is a candidate configuration in the first candidate configuration set.

In an embodiment, the second time interval is used to determine a valid time interval of the first configuration.

In an embodiment, the second time interval is a running time interval of the first timer.

In an embodiment, the second time interval is a running time interval of a second timer.

In an embodiment, the second timer is a timer.

In an embodiment, a cut-off moment of the second time interval is the expiration moment of the first timer.

In an embodiment, the cut-off moment of the second time interval is an expiration moment of the second timer.

In an embodiment, a start moment of the second time interval is not earlier than the end moment of the first time interval.

In an embodiment, the start moment of the second time interval is the end moment of the first time interval.

In an embodiment, a second time length is a time length of the second time interval.

In an embodiment, the second time length is configurable.

In an embodiment, the second time length is preconfigured.

In an embodiment, the first time length is equal to the second time length.

In an embodiment, the first time length is not equal to the second time length.

In an embodiment, the first timer is restarted at the start moment of the second time interval.

In an embodiment, at the start moment of the second time interval, the first timer is restarted, and the first timer is set to the second time length.

In an embodiment, the first timer is restarted at the first moment.

In an embodiment, when the first timer expires, the first timer is restarted.

In an embodiment, when the first timer expires, the first timer is restarted, and the first timer is set to the second time length.

In an embodiment, the first timer expires when the running time of the first timer reaches the second time length.

In an embodiment, the second timer is started at the start moment of the second time interval.

In an embodiment, at the start moment of the second time interval, the second timer is started, and the second timer is set to the second time length.

In an embodiment, the second timer is started at the first moment.

In an embodiment, the second timer is started when the first timer expires.

In an embodiment, when the first timer expires, the second timer is started, and the second timer is set to the second time length.

In an embodiment, the second timer expires when running time of the second timer reaches the second time length.

In an embodiment, the first time interval is configurable.

In an embodiment, the second time interval is configurable.

In an embodiment, the first time interval is periodic.

In an embodiment, the first time interval is not periodic.

In an embodiment, the second time interval is periodic.

In an embodiment, the second time interval is not periodic.

In an embodiment, the first time interval is equal to the second time interval.

In an embodiment, the first time interval is not equal to the second time interval.

In an embodiment, an ellipse in FIG. 9 is optional.

In an embodiment, the ellipse in FIG. 9 exists.

In an embodiment, the ellipse in FIG. 9 does not exist.

In an embodiment, within a time interval after the second time interval and before the first time interval, at least one candidate configuration other than the first configuration and the second configuration in the first candidate configuration set is used.

In an embodiment, within the time interval after the second time interval and before the first time interval, any candidate configuration other than the first configuration and the second configuration in the first candidate configuration set is not used.

In an embodiment, the first configuration is a configuration that is in the first candidate configuration set and that immediately follows the second configuration.

In an embodiment, the first configuration is used to determine one RS resource in a first RS resource group and a first SSB QCL, and the second configuration is used to determine the RS resource in the first RS resource group and a second SSB QCL. The first SSB is different from the second SSB.

In a sub-embodiment of this embodiment, that the first SSB is different from the second SSB includes: an index of the first SSB is different from an index of the second SSB.

In a sub-embodiment of this embodiment, that the first SSB is different from the second SSB includes: a pattern of an SSB of the first SSB is different from a pattern of an SSB of the second SSB.

In a sub-embodiment of this embodiment, that the first SSB is different from the second SSB includes: a periodicity of the first SSB is different from a periodicity of the second SSB.

In a sub-embodiment of this embodiment, that the first SSB is different from the second SSB includes: a time domain position of the first SSB in a half frame is different from a time domain position of the second SSB in a half frame.

In a sub-embodiment of this embodiment, that the first SSB is different from the second SSB includes: an average EPRE of an RE that is used in a network for first SSB transmission and that carries an SSS is different from an average EPRE of an RE that is used in a network for second SSB transmission and that carries an SSS.

In a sub-embodiment of this embodiment, the RS resource is any RS resource in the first RS resource group.

In a sub-embodiment of this embodiment, the RS resource is one RS resource in the first RS resource group.

In an embodiment, at the first moment after the first signaling is received, the first counter is reset when at least the first configuration is different from the second configuration.

### Embodiment 10

Embodiment 10 is a schematic diagram of TxRUs respectively associated with a first configuration and a second configuration according to an embodiment of this application, as shown in FIG. 10. In FIG. 10, before first signaling, in a second configuration, a port 0 is mapped to a TxRU 0 and a TxRU 1, and a port 1 is mapped to a TxRU 2 and a TxRU 3. After the first signaling, in a first configuration, the port 0 is mapped to the TxRU 1, and the port 1 is mapped to the TxRU 3.

In Embodiment 10, first signaling indicates the first configuration, and the first configuration depends on a quantity of valid TxRUs of at least a second node.

In an embodiment, the first configuration is different from the second configuration.

In an embodiment, a quantity of valid TxRUs of the second node associated with the first configuration is different from a quantity of valid TxRUs of the second node associated with the second configuration.

In an embodiment, the quantity of valid TxRUs of the second node associated with the first configuration is less than the quantity of valid TxRUs of the second node associated with the second configuration.

In an embodiment, a mapping relationship between a port associated with the first configuration and a TxRU is different from a mapping relationship between a port associated with the second configuration and a TxRU.

In an embodiment, before a first node receives the first signaling and after the first node receives the first signaling, ports in FIG. 10 remain unchanged.

In an embodiment, before the first node receives the first signaling, the second configuration is used.

In an embodiment, after the first node receives the first signaling, the first configuration is used.

In an embodiment, the first configuration is used at a first moment after the first node receives the first signaling.

In an embodiment, a first RS resource group is associated with one port.

In an embodiment, the first RS resource group is associated with the port 0.

In an embodiment, the first RS resource group is associated with the port 1.

In an embodiment, the first RS resource group is associated with one port other than the port 0 and the port 1.

In an embodiment, a port associated with the first RS resource group is configured by using an RRC message.

In an embodiment, the port associated with the first RS resource group is predefined.

In an embodiment, the port associated with the first RS resource group is default.

In an embodiment, the port associated with the first RS resource group is determined by the first node.

In an embodiment, it should be particularly noted that this example does not limit a quantity of ports in this application, this example does not limit a quantity of TxRUs of which each port is on before the first signaling, and this example does not limit a quantity of TxRUs of which each port is on after the first signaling.

In an embodiment, a quantity of TxRUs that are associated with one port and that are on before the first signaling is greater than a quantity of TxRUs that are associated with one port and that are on after the first signaling.

In an embodiment, the quantity of TxRUs that are associated with one port and that are on before the first signaling is equal to the quantity of TxRUs that are associated with one port and that are on after the first signaling.

In an embodiment, the quantity of TxRUs that are associated with one port and that are on before the first signaling is less than the quantity of TxRUs that are associated with one port and that are on after the first signaling.

### Embodiment 11

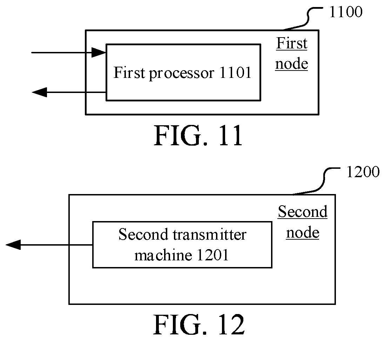

Embodiment 11 is a block diagram of a structure of a processing apparatus used in a first node according to an embodiment of this application, as shown in FIG. 11. In FIG. 11, the processing apparatus 1100 in the first node includes a first processor 1101.

The first processor 1101 receives a first indication from a lower layer each time, and adds 1 to a first counter; receives first signaling; and resets the first counter at a first moment after the first signaling is received. The lower layer includes a physical layer, the first signaling indicates a first configuration, the first configuration depends on a quantity of valid TxRUs of at least a second node, and the first counter is used to monitor a radio link problem.

In an embodiment, the first signaling indicates a first time length, the first time length is used to determine a first time interval, and the first moment depends on a cut-off moment of the first time interval.

In an embodiment, the first processor 1101 receives second signaling, where the second signaling indicates a first candidate configuration set. The first candidate configuration set includes at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

In an embodiment, in the first processor 1101, the lower layer reports the first indication to a higher layer each time radio link quality evaluated based on a first RS resource group is worse than a first threshold. The first RS resource group includes at least one RS resource. The higher layer is a protocol layer above the physical layer.

In an embodiment, in the first processor 1101, the lower layer reports, after the first moment, the first indication to the higher layer each time the radio link quality evaluated based on the first RS resource group is worse than a second threshold. The first threshold is different from the second threshold.

In an embodiment, at the first moment after the first signaling is received, the first counter is reset when at least a quantity of valid TxRUs of the second node associated with the first RS resource group changes.

In an embodiment, the first processor 1101 includes antennas 452, receivers 454, a multi-antenna receive processor 458, a receive processor 456, a controller/processor 459, a memory 460, and a data source 467 shown in FIG. 4 of this application.

In an embodiment, the first processor 1101 includes the antennas 452, the receivers 454, the multi-antenna receive processor 458, and the receive processor 456 shown in FIG. 4 of this application.

In an embodiment, the first processor 1101 includes the antennas 452, the receivers 454, and the receive processor 456 shown in FIG. 4 of this application.

In an embodiment, the first processor 1101 includes the antennas 452, transmitters 454, a multi-antenna transmit processor 457, a transmit processor 468, the controller/processor 459, the memory 460, and the data source 467 shown in FIG. 4 of this application.

In an embodiment, the first processor 1101 includes the antennas 452, the transmitters 454, the multi-antenna transmit processor 457, and the transmit processor 468 shown in FIG. 4 of this application.

In an embodiment, the first processor 1101 includes the antennas 452, the transmitters 454, and the transmit processor 468 shown in FIG. 4 of this application.

### Embodiment 12

Embodiment 12 is a block diagram of a structure of a processing apparatus used in a second node according to an embodiment of this application, as shown in FIG. 12. In FIG. 12, the processing apparatus 1200 in the second node includes a second transmitter machine 1201.

The second transmitter machine 1201 sends first signaling. A first indication is received from a lower layer each time, 1 is added to a first counter, the first counter is reset at a first moment after the first signaling is received, the lower layer includes a physical layer, the first signaling indicates a first configuration, the first configuration depends on a quantity of valid TxRUs of at least a second node, and the first counter is used to monitor a radio link problem.

In an embodiment, the first signaling indicates a first time length, the first time length is used to determine a first time interval, and the first moment depends on a cut-off moment of the first time interval.

In an embodiment, the second transmitter machine 1201 sends second signaling, where the second signaling indicates a first candidate configuration set. The first candidate configuration set includes at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

In an embodiment, the first indication is reported by the lower layer to a higher layer each time radio link quality evaluated based on a first RS resource group is worse than a first threshold. The first RS resource group includes at least one RS resource. The higher layer is a protocol layer above the physical layer.

In an embodiment, after the first moment, the first indication is reported by the lower layer to the higher layer each time the radio link quality evaluated based on the first RS resource group is worse than a second threshold. The first threshold is different from the second threshold.

In an embodiment, at the first moment after the first signaling is received, the first counter is reset when at least the quantity of valid TxRUs of the second node associated with the first RS resource group changes.

In an embodiment, the second transmitter machine 1201 includes antennas 420, transmitters 418, a multi-antenna transmit processor 471, a transmit processor 416, a controller/processor 475, and a memory 476 shown in FIG. 4 of this application.

In an embodiment, the second transmitter machine 1201 includes the antennas 420, the transmitters 418, the multi-antenna transmit processor 471, and the transmit processor 416 shown in FIG. 4 of this application.

In an embodiment, the second transmitter machine 1201 includes the antennas 420, the transmitters 418, and the transmit processor 416 shown in FIG. 4 of this application.

A person of ordinary skill in the art may understand that, all or some steps in the method may be completed by instructing relevant hardware by using a program. The program may be stored in a computer-readable storage medium, for example, a read-only memory, a hard disk drive, or an optical disc. Optionally, all or some of the steps of the foregoing embodiments may alternatively be implemented by using one or more integrated circuits. Correspondingly, each module unit in the foregoing embodiments may be implemented in the form of hardware, or may be implemented in the form of a software functional module. This application is not limited to any specific form of combination of software and hardware. The user equipment, the terminal, and the UE in this application include, but are not limited to, wireless communication devices such as an uncrewed aerial vehicle, a communication module on the uncrewed aerial vehicle, a remote control aircraft, an aircraft, a small aircraft, a mobile phone, a tablet computer, a notebook computer, a vehicle-mounted communication device, a wireless sensor, a network interface card, an Internet of Things terminal, an RFID terminal, an NB-IOT terminal, a machine type communication (MTC) terminal, an enhanced MTC (eMTC) terminal, a data card, an Internet adapter, a low-cost mobile phone, and a low-cost tablet computer. The base station or system device in this application includes, but is not limited to, a wireless communication device such as a macrocellular base station, a microcellular base station, a femtocell, a relay base station, an NR NodeB (gNB), and a transmission reception point (Transmitter Receiver Point, TRP).

The foregoing descriptions are merely examples of embodiments of this application and are not intended to limit the protection scope of this application. Any modification, equivalent replacement, improvement, and the like made within the spirit and principle of this application shall fall within the protection scope of this application.

## Claims

1. A first node used for wireless communication, comprising:
a first processor, receiving a first indication from a lower layer each time, apd adding 1 to a first counter; receiving first signaling; and resetting the first counter at a first moment after the first signaling is received, wherein
the lower layer comprises a physical layer, the first signaling indicates a first configuration, the first configuration depends on a quantity of valid TxRUs of at least a second node, and the first counter is used to monitor a radio link problem.

2. The first node according to claim 1, wherein the first signaling indicates a first time length, the first time length is used to determine a first time interval, and the first moment depends on a cut-off moment of the first time interval.

3. The first node according to claim 1 or 2, comprising:
the first processor, receiving second signaling, wherein the second signaling indicates a first candidate configuration set, wherein
the first candidate configuration set comprises at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

4. The first node according to any one of claims 1 to 3, comprising:
the first processor, wherein the lower layer reports the first indication to a higher layer each time radio link quality evaluated based on a first RS resource group is worse than a first threshold, wherein
the first RS resource group comprises at least one RS resource, and the higher layer is a protocol layer above the physical layer.

5. The first node according to claim 4, comprising:
the first processor, wherein the lower layer reports, after the first moment, the first indication to the higher layer each time the radio link quality evaluated based on the first RS resource group is worse than a second threshold; and
the first threshold is different from the second threshold.

6. The first node according to claim 4 or 5, wherein at the first moment after the first signaling is received, the first counter is reset when at least the quantity of valid TxRUs of the second node associated with the first RS resource group changes.

7. A second node used for wireless communication, comprising:
a second transmitter machine, sending first signaling, wherein
a first indication is received from a lower layer each time, 1 is added to a first counter, the first counter is reset at a first moment after the first signaling is received, the lower layer comprises a physical layer, the first signaling indicates a first configuration, the first configuration depends on a quantity of valid TxRUs of at least a second node, and the first counter is used to monitor a radio link problem.

8. The second node according to claim 7, comprising:
the second transmitter machine, sending second signaling, wherein the second signaling indicates a first candidate configuration set, wherein
the first candidate configuration set comprises at least two candidate configurations, the first configuration is one candidate configuration in the first candidate configuration set, quantities of valid TxRUs of the second node corresponding to the at least two candidate configurations in the first candidate configuration set are different, and the first signaling indicates the first configuration in the first candidate configuration set.

9. A method applied to a first node used for wireless communication, comprising:
receiving a first indication from a lower layer each time, and adding 1 to a first counter; receiving first signaling; and resetting the first counter at a first moment after the first signaling is received, wherein
the lower layer comprises a physical layer, the first signaling indicates a first configuration, the first configuration depends on a quantity of valid TxRUs of at least a second node, and the first counter is used to monitor a radio link problem.

10. A method applied to a second node used for wireless communication, comprising:
sending first signaling, wherein
a first indication is received from a lower layer each time, 1 is added to a first counter, the first counter is reset at a first moment after the first signaling is received, the lower layer comprises a physical layer, the first signaling indicates a first configuration, the first configuration depends on a quantity of valid TxRUs of at least a second node, and the first counter is used to monitor a radio link problem.
